# EUROPEAN PATENT APPLICATION

(11) **EP 1 770 948 A1**
(43) Date of publication of application: **04.04.2007**
(21) Application number: 06121388.0
(22) Date of filing: 27.09.2006
(51) Int. Cl.: H04L 29/06, H04M 7/00

(54) **Method and apparatus for tagging customer specific signalling packets**

(30) Priority: 29.09.2005 US 240186
(71) Applicant: AT&T Corp., New York, NY 10013-2412 (US)
(72) Inventor: Croak, Marian, Fair Haven, NJ 07704 (US); Eslambolchi, Hossein, Los Altos Hills, CA 94022 (US)
(74) Representative: Harding, Richard Patrick

(57) **Abstract**

A method and apparatus for enabling a network provider to tag calls originating from distinct customer segments and process these tagged calls according to rules associated with their tagged identities are disclosed. For example, calls from a business or enterprise customer may be routed to a carrier who ensures 99.999% service availability at a certain cost, whereas calls from a residential customer may be routed to a lower cost carrier. The tags would be formatted in a standard way in the VoIP signaling header so that they can be recognized and acted upon by peered or partner carrier networks involved in processing these tagged calls.

## Description

The present invention relates generally to communication networks and, more particularly, to a method and apparatus for tagging customer specific signaling packets in communication networks, e.g., packet networks such as Voice over Internet Protocol (VoIP) networks.

### BACKGROUND OF THE INVENTION

Network providers of packet network services, e.g., VoIP services typically serve multiple market segments across both business and residential customers. These different customer segments have different expectations in terms of voice quality, service availability, and costs. The current VoIP signaling does not have a mechanism to separate customers based on their segment type.

Therefore, a need exists for a method and apparatus for tagging customer specific signaling packets in a packet network, e.g., a VoIP network.

### SUMMARY OF THE INVENTION

In one embodiment, the present invention enables a network provider to tag calls originating from distinct customer segments and process these tagged calls according to rules associated with their tagged identities. Calls from a business customer, for example, may be routed to a carrier who ensures 99.999% service availability at a certain cost, whereas calls from a residential customer may be routed to a lower cost carrier. The tags would be formatted in a standard way in the VoIP signaling header so that they can be recognized and acted upon by peered or partner carrier networks involved in processing these tagged calls.

### BRIEF DESCRIPTION OF THE DRAWINGS

The teaching of the present invention can be readily understood by considering the following detailed description in conjunction with the accompanying drawings, in which:

FIG. 1 illustrates an exemplary Voice over Internet Protocol (VoIP) network related to the present invention;

FIG. 2 illustrates an example of tagging customer specific signaling packets in a VoIP network of the present invention;

FIG. 3 illustrates a flowchart of a method for processing tagged customer specific signaling packets in a packet network of the present invention;

FIG. 4 illustrates a flowchart of a method for tagging customer specific signaling packets in a packet network of the present invention; and

FIG. 5 illustrates a high level block diagram of a general purpose computer suitable for use in performing the functions described herein.

To facilitate understanding, identical reference numerals have been used, where possible, to designate identical elements that are common to the figures.

### DETAILED DESCRIPTION

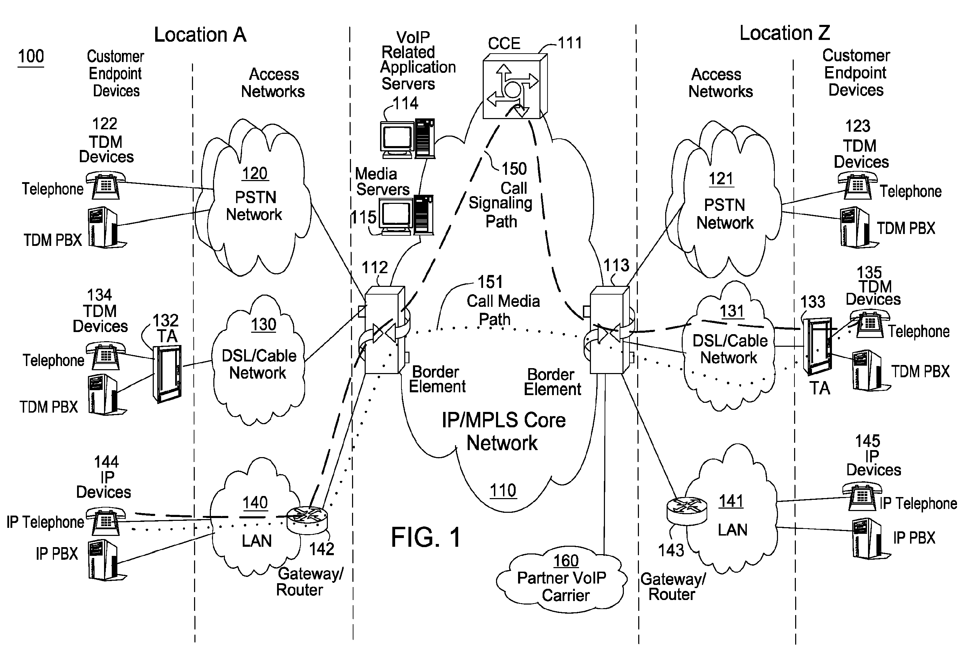

To better understand the present invention, FIG. 1 illustrates an example network, e.g., a packet network such as a VoIP network related to the present invention. Exemplary packet networks include internet protocol (IP) networks, asynchronous transfer mode (ATM) networks, frame-relay networks, and the like. An IP network is broadly defined as a network that uses Internet Protocol to exchange data packets. Thus, a VoIP network or a SoIP (Service over Internet Protocol) network is considered an IP network.

In one embodiment, the VoIP network may comprise various types of customer endpoint devices connected via various types of access networks to a carrier (a service provider) VoIP core infrastructure over an Internet Protocol/Multi-Protocol Label Switching (IP/MPLS) based core backbone network. Broadly defined, a VoIP network is a network that is capable of carrying voice signals as packetized data over an IP network. The present invention is described below in the context of an illustrative VoIP network. Thus, the present invention should not be interpreted to be limited by this particular illustrative architecture.

The customer endpoint devices can be either Time Division Multiplexing (TDM) based or IP based. TDM based customer endpoint devices 122, 123, 134, and 135 typically comprise of TDM phones or Private Branch Exchange (PBX). IP based customer endpoint devices 144 and145 typically comprise IP phones or IP PBX. The Terminal Adaptors (TA) 132 and 133 are used to provide necessary interworking functions between TDM customer endpoint devices, such as analog phones, and packet based access network technologies, such as Digital Subscriber Loop (DSL) or Cable broadband access networks. TDM based customer endpoint devices access VoIP services by using either a Public Switched Telephone Network (PSTN) 120, 121 or a broadband access network via a TA 132 or 133. IP based customer endpoint devices access VoIP services by using a Local Area Network (LAN) 140 and 141 with a VoIP gateway or router 142 and 143, respectively.

The access networks can be either TDM or packet based. A TDM PSTN 120 or 121 is used to support TDM customer endpoint devices connected via traditional phone lines. A packet based access network, such as Frame Relay, ATM, Ethernet or IP, is used to support IP based customer endpoint devices via a customer LAN, e.g., 140 with a VoIP gateway and router 142. A packet based access network 130 or 131, such as DSL or Cable, when used together with a TA 132 or 133, is used to support TDM based customer endpoint devices.

The core VoIP infrastructure comprises of several key VoIP components, such the Border Element (BE) 112 and 113, the Call Control Element (CCE) 111, VoIP related Application Servers (AS)114, and Media Server (MS) 115. The BE resides at the edge of the VoIP core infrastructure and interfaces with customers endpoints over various types of access networks. A BE is typically implemented as a Media Gateway and performs signaling, media control, security, and call admission control and related functions. The CCE resides within the VoIP infrastructure and is connected to the BEs using the Session Initiation Protocol (SIP) over the underlying IP/MPLS based core backbone network 110. The CCE is typically implemented as a Media Gateway Controller or a softswitch and performs network wide call control related functions as well as interacts with the appropriate VoIP service related servers when necessary. The CCE functions as a SIP back-to-back user agent and is a signaling endpoint for all call legs between all BEs and the CCE. The CCE may need to interact with various VoIP related Application Servers (AS) in order to complete a call that require certain service specific features, e.g. translation of an E.164 voice network address into an IP address.

For calls that originate or terminate in a different carrier, they can be handled through the PSTN 120 and 121 or the Partner IP Carrier 160 interconnections. For originating or terminating TDM calls, they can be handled via existing PSTN interconnections to the other carrier. For originating or terminating VoIP calls, they can be handled via the Partner IP carrier interface 160 to the other carrier.

In order to illustrate how the different components operate to support a VoIP call, the following call scenario is used to illustrate how a VoIP call is setup between two customer endpoints. A customer using IP device 144 at location A places a call to another customer at location Z using TDM device 135. During the call setup, a setup signaling message is sent from IP device 144, through the LAN 140, the VoIP Gateway/Router 142, and the associated packet based access network, to BE 112. BE 112 will then send a setup signaling message, such as a SIP-INVITE message if SIP is used, to CCE 111. CCE 111 looks at the called party information and queries the necessary VoIP service related application server 114 to obtain the information to complete this call. In one embodiment, the Application Server (AS) functions as a SIP back-to-back user agent. If BE 113 needs to be involved in completing the call; CCE 111 sends another call setup message, such as a SIP-INVITE message if SIP is used, to BE 113. Upon receiving the call setup message, BE 113 forwards the call setup message, via broadband network 131, to TA 133. TA 133 then identifies the appropriate TDM device 135 and rings that device. Once the call is accepted at location Z by the called party, a call acknowledgement signaling message, such as a SIP 200 OK response message if SIP is used, is sent in the reverse direction back to the CCE 111. After the CCE 111 receives the call acknowledgement message, it will then send a call acknowledgement signaling message, such as a SIP 200 OK response message if SIP is used, toward the calling party. In addition, the CCE 111 also provides the necessary information of the call to both BE 112 and BE 113 so that the call data exchange can proceed directly between BE 112 and BE 113. The call signaling path 150 and the call media path 151 are illustratively shown in FIG. 1. Note that the call signaling path and the call media path are different because once a call has been setup up between two endpoints, the CCE 111 does not need to be in the data path for actual direct data exchange.

Media Servers (MS) 115 are special servers that typically handle and terminate media streams, and to provide services such as announcements, teleconference bridges, transcoding, and Interactive Voice Response (IVR) messages for VoIP service applications.

Note that a customer in location A using any endpoint device type with its associated access network type can communicate with another customer in location Z using any endpoint device type with its associated network type as well. For instance, a customer at location A using IP customer endpoint device 144 with packet based access network 140 can call another customer at location Z using TDM endpoint device 123 with PSTN access network 121. The BEs 112 and 113 are responsible for the necessary signaling protocol translation, e.g., SS7 to and from SIP, and media format conversion, such as TDM voice format to and from IP based packet voice format.

Network providers of VoIP services typically serve multiple market segments across both business and residential customers. These different customer segments have different expectations in terms of voice quality, service availability, and costs. The current VoIP signaling does not have a mechanism to separate customers based on their segment type.

To address this need, the present invention enables a network provider to tag calls originating from distinct customer segments and process these tagged calls according to rules associated with their tagged identities. Calls from a business customer, for example, may be routed to a carrier who ensures 99.999% service availability at a certain cost, whereas calls from a residential customer may be routed to a lower cost carrier. The tags would be formatted in a standard way in the VoIP signaling header so that they can be recognized and acted upon by peered or partner carrier networks involved in processing these tagged calls.

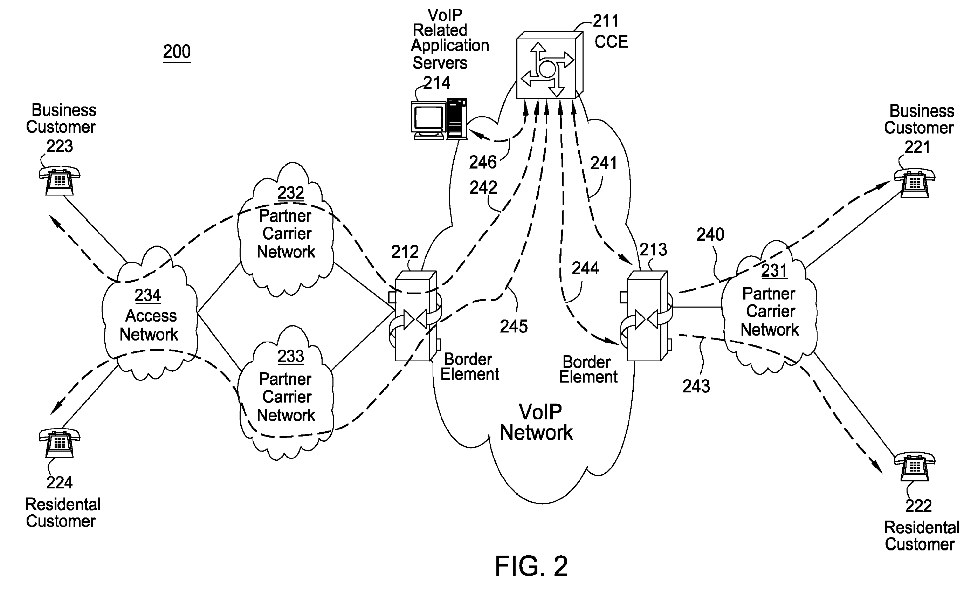

FIG. 2 illustrates an exemplary communication architecture 200 for tagging customer specific signaling packets in a packet network, e.g., a VoIP network of the present invention. In FIG. 2, business customer 221 requires different routing and quality of service treatment from residential customer 222. To further illustrate, business customer 221 makes a call to another business customer 223. The call setup signaling message is sent via partner carrier network 231 to BE 213 using signaling flow 240. In one embodiment, since business customer 221 is classified as a business segment customer, BE 213 will tag the call setup signaling message by inserting a customer type field or a customer segment type field populated with a value corresponding to the business customer type in the SIP signaling header of the call setup signaling message. In another embodiment, partner carrier network 231 will tag the call setup signaling message by inserting a customer segment type field populated with a value corresponding to the business customer type in the SIP signaling header of the call setup signaling message. Note that the number of customer segment types and the values representing each customer segment type is a configurable parameter set by the network operator. Then, the call setup message is sent by BE 213 to CCE 211 using signaling flow 241 for further processing. Upon receiving the call setup message, CCE 211 finds out that the call setup message is tagged as a business customer type based on the customer segment type field in the signaling message header. CCE 211 communicates with AS 214 using signaling flow 246 to retrieve the service logics, quality of service treatments, and routing rules associated with the tagged call setup message. In this instance, business customer 221 requires the call to be routed through partner carrier network 232 for higher service availability. Therefore, CCE 211 routes the call setup message using signaling flow 242 via BE 212, partner carrier network 232, and access network 234 to reach business customer 223.

On the other hand, residential customer 222 makes a call to another residential customer 224 and the call setup signaling message is sent via partner carrier network 231 to BE 213 using signaling flow 243. In one embodiment, since residential customer 222 is classified as a residential segment customer, BE 213 will tag the call setup signaling message by inserting a customer segment type field populated with a value corresponding to the residential customer type in the SIP signaling header of the call setup signaling message. In another embodiment, partner carrier network 231 will tag the call setup signaling message by inserting a customer segment type field populated with a value corresponding to the residential customer type in the SIP signaling header of the call setup signaling message. Note that the number of customer segment types and the values representing each customer segment type is a configurable parameter set by the network operator. Then, the call setup message is sent by BE 213 to CCE 211 using signaling flow 244 for further processing. Upon receiving the call setup message, CCE 211 finds out that the call setup message is tagged as a residential customer type based on the customer segment type field in the signaling message header. CCE 211 communicates with AS 214 using signaling flow 246 to retrieve the service logics, quality of service treatments, and routing rules associated with the tagged call setup message. In this instance, residential customer 222 requires the call to be routed through partner carrier network 233 with lower costs. Therefore, CCE 211 routes the call setup message using signaling flow 245 via BE 212, partner carrier network 233, and access network 234 to reach residential customer 224.

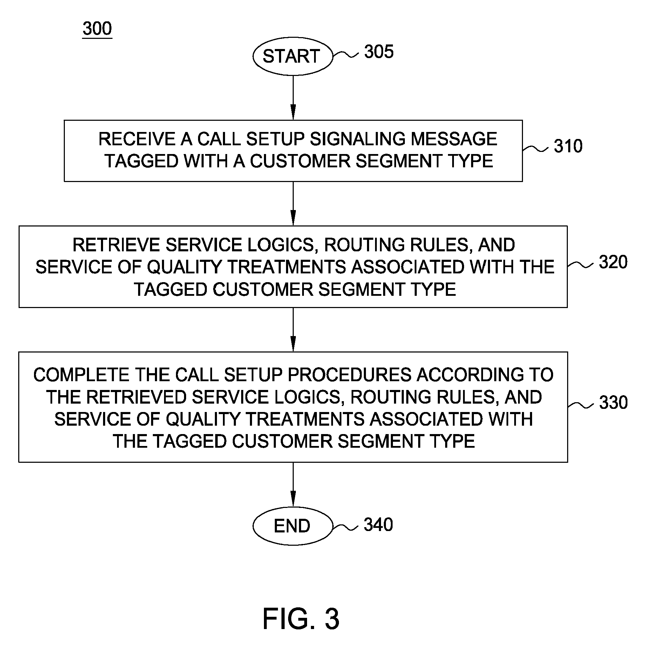

FIG. 3 illustrates a flowchart of a method 300 for processing tagged customer specific signaling packets in a packet network, e.g., a VoIP network of the present invention. For example, the method can be executed by a CCE in a VoIP network. Method 300 starts in step 305 and proceeds to step 310.

In step 310, the method receives a call setup signaling message tagged with a specific customer segment type in the signaling header of the call setup message. Note that the number of customer segment types and the values representing each customer segment type is a configurable parameter set by the network operator. For example, there may be different levels of business customers and different levels of residential customers, thereby requiring a greater number of customer segment types.

In step 320, the method retrieves the service logics, quality of service treatments, and routing rules associated with the specific customer segment type from an AS.

In step 330, the method completes the call setup procedures according to the retrieved service logics, quality of service treatments, and routing rules associated with the specific customer segment type. Note that the service logics, quality of service treatments, and routing rules associated with the specific customer segment type affects how a call is treated. For instance, a call that requires low costs will be routed to and through lower costs partner carriers. A call that requires higher availability will be routed to and through high reliability partner carriers even at a higher cost. The method ends in step 340.

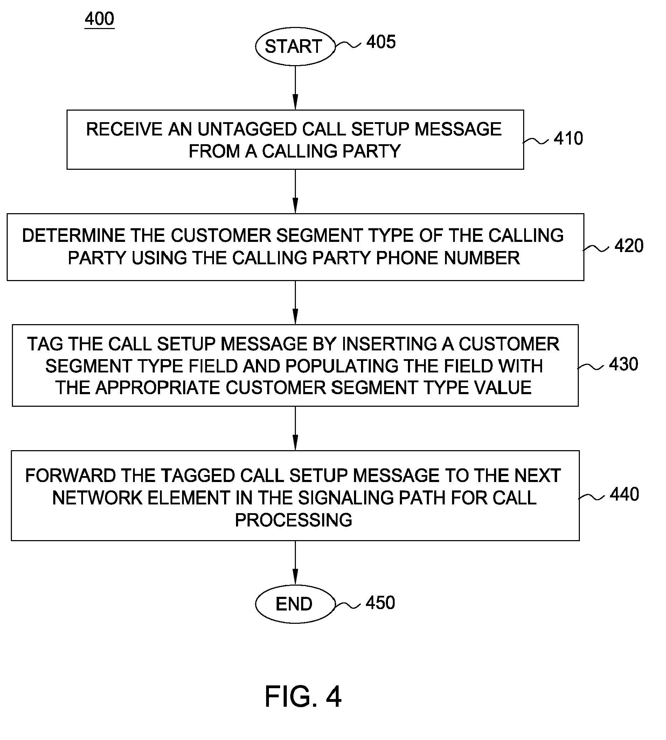

FIG. 4 illustrates a flowchart of a method 400 for tagging customer specific signaling packets in a packet network, e.g., a VolP network of the present invention. For example, the method can be executed by a BE in a VolP network or by a partner carrier network before a call setup signaling message enters the VoIP network. Method 400 starts in step 405 and proceeds to step 410.

In step 410, the method received an untagged call setup signaling message from a calling party. The calling party can be a business customer or a residential customer.

In step 420, the method determines the customer segment type of the calling party based on the calling party phone number. This step can be performed by a BE of the VoIP network or by a partner carrier network.

In step 430, the method tags the call setup message by inserting a customer segment type field in the signaling header, such as the SIP header in one embodiment, and populating the field with the appropriate customer type value or customer segment type value, e.g., a "11" can represent a business customer, whereas "00" represents a residential customer. It should be noted that any form or value can be used in representing the customer segment type value.

In step 440, the method forwards the tagged call setup message to the next network element in the signaling path for call processing. The method ends in step 450.

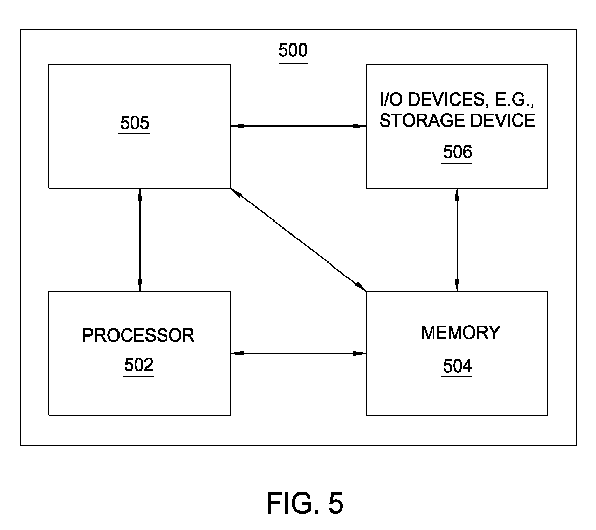

FIG. 5 depicts a high level block diagram of a general purpose computer suitable for use in performing the functions described herein. As depicted in FIG. 5, the system 500 comprises a processor element 502 (e.g., a CPU), a memory 504, e.g., random access memory (RAM) and/or read only memory (ROM), a module 505 for tagging customer specific signaling packets, and various input/output devices 506 (e.g., storage devices, including but not limited to, a tape drive, a floppy drive, a hard disk drive or a compact disk drive, a receiver, a transmitter, a speaker, a display, a speech synthesizer, an output port, and a user input device (such as a keyboard, a keypad, a mouse, and the like)).

It should be noted that the present invention can be implemented in software and/or in a combination of software and hardware, e.g., using application specific integrated circuits (ASIC), a general purpose computer or any other hardware equivalents. In one embodiment, the present module or process 505 for tagging customer specific signaling packets can be loaded into memory 504 and executed by processor 502 to implement the functions as discussed above. As such, the present process 505 for tagging customer specific signaling packets (including associated data structures) of the present invention can be stored on a computer readable medium or carrier, e.g., RAM memory, magnetic or optical drive or diskette and the like.

While various embodiments have been described above, it should be understood that they have been presented by way of example only, and not limitation. Thus, the breadth and scope of a preferred embodiment should not be limited by any of the above-described exemplary embodiments, but should be defined only in accordance with the following claims and their equivalents.

## Claims

1. A method for processing a signaling message in a communication network, comprising:
receiving a call setup message, where said call setup message is tagged with a customer type field, where said customer type field defines a type of customer; and
processing said call setup message in accordance with said customer type field.

2. The method of claim 1, wherein said communication network is a Voice over Internet Protocol, VoIP, network or a Service over Internet Protocol, SoIP, network.

3. The method of claim 1 or 2, wherein said call setup message is tagged by inserting said customer type field in a signaling message header of said call setup message with a customer type value.

4. The method of claim 3, wherein said customer type field is inserted by a Border Element, BE, upon entering said communication network or a partner carrier network during transit within said partner carrier network.

5. The method of claim 3 or 4, wherein said customer type value is a configurable parameter set by an operator of said communication network.

6. The method of any one of the preceding claims, wherein said processing comprises:
retrieving at least one of: service logic, quality of service treatment, or routing rule that is associated with a populated value of said customer type field, wherein preferably said at least one of: service logic, quality of service treatment, or routing rule is retrieved from an Application Server, AS.

7. The method of claim any one of the preceding claims, wherein said call setup message is received by a Call Control Element, CCE.

8. The method of any one of the preceding claims, wherein said processing comprises:
routing said call setup message according to at least one: service logic, quality of service treatment, or routing rule that is associated with a populated value of said customer type field.

9. A computer-readable medium having stored thereon a plurality of instructions, the plurality of instructions including instructions which, when executed by a processor, cause the processor to perform the steps of the method of any one of the preceding claims.

10. A apparatus for processing a signaling message in a communication network, comprising:
means for receiving a call setup message, where said call setup message is tagged with a customer type field, where said customer type field defines a type of customer; and
means for processing said call setup message in accordance with said customer type field.

11. The apparatus of claim 10, wherein said communication network is a Voice over Internet Protocol, VoIP, network or a Service over Internet Protocol, SoIP, network.
